## Europäisches Patentamt

## European Patent Office

## Office européen des brevets

(11) Veröffentlichungsnummer: **0 007 552**

**A1**

(12) # EUROPÄISCHE PATENTANMELDUNG

(21) Anmeldenummer: **79102478.9**

(22) Anmeldetag: **16.07.79**

(51) Int. Cl.³: **H 02 P 7/44**
**G 01 R 33/02**

(30) Priorität: **31.07.78 DE 2833593**

(43) Veröffentlichungstag der Anmeldung:
**06.02.80 Patentblatt 80/3**

(84) Benannte Vertragsstaaten:
**AT BE CH DE FR GB IT LU NL SE**

(71) Anmelder: **SIEMENS AKTIENGESELLSCHAFT Berlin
und München
Postfach 261
D-8000 München 22(DE)**

(72) Erfinder: **Dreiseitl, Walter, Dipl.-Ing.
Alterlanger Strasse 23a
D-8520 Erlangen(DE)**

(72) Erfinder: **Köllensperger, Dieter, Dipl.-Ing.
Kulmbacher Strasse 4
D-8520 Erlangen(DE)**

(72) Erfinder: **Salzmann, Theodor, Dipl.-Ing.
Leimbergerstrasse 29
D-8520 Erlangen(DE)**

(72) Erfinder: **Schlegel, Thomas
Dr. Georg-Dassler-Strasse 36
D-8551 Hemhofen(DE)**

(72) Erfinder: **Weigel, Wolf-Dieter, Dr. Dipl.-Ing.
Nr. 126
D-8524 Kleinsendelbach(DE)**

(54) **Schaltungsanordnung zur Bildung eines elektrischen Spannungssignals, das einer Flusskomponente in einer Drehfeldmaschine proportional ist.**

(57) Zur Bildung eines elektrischen Spannungssignals, das einer Flußkomponente ($\psi_R$) in einer Drehfeldmaschine (M) proportional ist, ist einer Schaltungsanordnung (I) eingangsseitig eine zur Flußkomponente gehörige Spannung ($u_R$) zugeführt. Am Ausgang eines Integrators (V1) ist ein der Flußkomponente ($\psi_R$) proportionales Spannungssignal abgegriffen. Der Eingang eines zur Unterdrückung des Gleichanteils dieses Spannungssignals bemessenen Nullpunktsreglers (V2, V3, V4, F1, F2) ist mit dem Ausgang des Integrators (V1) verbunden und der Ausgang an einem Summenpunkt (S1) am Eingang des Integrators (V1) angeschlossen. Unabhängig von der Frequenz ($\omega$) der Drehfeldmaschine (M) wird der Maschinenfluß phasenrichtig und amplitudengetreu erfasst, wobei der Nullpunktsregler vom Beginn der Lageortung des Läufers der Drehfeldmaschine (M) bis zur Nennfrequenz der Drehfeldmaschine (M) kontinuierlich im Eingriff sein soll. Der Nullpunktsregler (V2, V3, V4, F1, F2) weist einen P-Regler (V3) und einen I-Regler (V4) auf, deren Ausgangssignale dem Summenpunkt (S1) zugeführt sind. Das Ausgangssignal des Integrators (V1) ist proportional zur Frequenz ($\omega$) der Drehfeldmaschine (M) gewichtet (a; F1) dem Eingang des P-Reglers (V3) und proportional zum Quadrat der Frequenz ($\omega^2$) gewichtet ($a^2$; F1, F2) dem Eingang des I-Reglers (V4) zugeführt, wobei der Gewichtungsfaktor (a) einen Maximalwert von 1 aufweist. Die Schaltungsanordnung (I) stellt einen Wechselspannungsintegrator dar, dessen Eigenfrequenz von der Frequenz der Drehfeldmaschine abhängig ist, wobei die Durchtrittsfrequenz und die Dämpfung konstant bleiben. Auch der Phasenfehler bleibt über den gesamten Drehzahlbereich der Drehfeldmaschine (M) konstant.

./...

FIG 1

FIG 4

SIEMENS AKTIENGESELLSCHAFT          Unser Zeichen
Berlin und München                  VPA 78 P 3 1 3 8 EUR

Schaltungsanordnung zur Bildung eines elektrischen Spannungssignals, das einer Flußkomponente in einer Drehfeldmaschine proportional ist

Die Erfindung betrifft eine Schaltungsanordnung zur Bildung eines elektrischen Spannungssignals, das einer Flußkomponente in einer Drehfeldmaschine proportional ist, der eingangsseitig eine zur Flußkomponente gehörigen Sternspannung proportionale Spannung zugeführt ist, mit einem Integrator als Eingangsglied, an dessen Ausgang das der Flußkomponente proportionale Spannungssignal abgegriffen ist, und mit einem zur Unterdrückung des Gleichanteils dieses Spannungssignals bemessenen Nullpunktsregler, dessen Eingang mit dem Ausgang des Integrators verbunden ist und dessen Ausgang an einem Summenpunkt am Eingang des Integrators angeschlossen ist.

Eine derartige Schaltungsanordnung ist aus der DE-AS 26 35 965 bekannt. Der Begriff "Drehfeldmaschine" umfaßt Synchron- und Asynchronmaschinen, die als Motor oder als Generator betreibbar sind.

Die bekannte Schaltungsanordnung bildet den Fluß-Istwert durch Integration der Klemmenspannung der Drehfeldmaschi-

Spl 2 Met / 25.7.1978

ne, wobei der Strom zur Berücksichtigung der ohmschen Ständerspannungsabfälle und induktiven Sternspannungen herangezogen wird. Bei einer dreiphasigen Drehfeldmaschine sind hierbei zwei derartige Schaltungsanordnungen für zwei Phasen der Drehfeldmaschine nötig. Die damit ermittelten beiden Flußkomponenten bestimmen die Lage des Flußvektors und seinen Betrag.

Eine Information über Lage und Größe des Flußvektors ermöglicht es, die Drehfeldmaschine feldorientiert (vgl. Siemens-Zeitschrift 1971, Seiten 765 bis 768 und DE-PS 23 53 594) zu betreiben.

Um das Wegdriften des in der bekannten Schaltungsanordnung eingesetzten Integrators infolge von Gleichspannungsanteilen auszuschließen, ist ein PI-Nullpunktsregler eingesetzt. Mit der Wahl der Parameter des PI-Nullpunktsreglers waren auch der Amplituden- und Phasenfehler der ermittelten Flußkomponente bestimmt. Der Phasenfehler ist hierbei drehzahlabhängig. Wenn die Auslegung des PI-Nullpunktsreglers so erfolgt, daß der Phasenfehler bei der kleinsten Betriebsfrequenz der Drehfeldmaschine noch ausreichend klein ist, ergeben sich bei Schwebungsvorgängen zwischen Maschinen- und Netzfrequenz sehr hohe Verstärkungen, so daß bei Antriebsregelungen Instabilitäten auftreten können.

Beim Anfahren der Drehfeldmaschine ist es von besonderer Bedeutung, die Flußkomponenten möglichst genau zu erfassen, da eine Fehlmessung im ungünstigsten Fall dazu führen kann, daß die Drehfeldmaschine nicht anfahren kann. Hierfür kann bei der bekannten Schaltungsanordnung die Nullpunktsregelung abgeschaltet werden. Hierbei ist die Bestimmung des Zuschaltzeitpunktes der Nullpunktsregelung und das Zuschalten auf die laufende Maschine problematisch, da hierbei Ausgleichsvorgänge auftreten können, die Stabilitätsprobleme nach sich ziehen.

Der Erfindung liegt die Aufgabe zugrunde, eine Schaltungsanordnung der eingangs genannten Art so auszugestalten, daß die Flußkomponente unabhängig von der Frequenz der Drehfeldmaschine mit nur geringem und konstantem Phasenfehler amplitudengetreu erfaßt werden kann und ein synchronisiertes Zuschalten des Nullpunktsreglers entfällt.

Die Aufgabe wird erfindungsgemäß dadurch gelöst, daß der Nullpunktsregler einen P-Regler und einen I-Regler auf- weist, daß das Ausgangssignal des P-Reglers und das Aus- gangssignal des I-Reglers dem Summenpunkt zugeführt sind und daß das Ausgangssignal des Integrators proportional zur Frequenz der Drehfeldmaschine gewichtet dem Eingang des P-Reglers und proportional dem Quadrat der Frequenz gewichtet dem Eingang des I-Reglers zugeführt ist, wobei die Gewichtung einen Maximalwert von 1 aufweist.

Die erfindungsgemäße Schaltungsanordnung stellt somit einen Wechselspannungsintegrator als eine Art adaptives Spannungsmodell dar, dessen Eigenfrequenz $\omega_o$ bei kon- stanter Durchtrittsfrequenz $\omega_D$ und konstanter Dämpfung d in Abhängigkeit von der Frequenz der Drehfeldmaschine veränderbar ist. Zur Lageortung des Läuferflusses der Drehfeldmaschine im Stillstand (n = 0) vor dem Anfahren wird die Eigenfrequenz $\omega_o$ der Schaltungsanordnung gleich Null eingestellt, indem der eingangsseitige Gewichtungsfaktor des P-Reglers und des I-Reglers auf Null gesetzt wird. Damit treten außer Driftfehlern und Fehlern durch die Erfassung der beim Auferregen der Sternspannung keine weiteren Fehler mehr auf. Eine synchronisierte Freigabe des Nullpunktsreglers beim Ma- schinenanlauf entfällt, da diese Eigenfrequenz $\omega_o$ durch kontinuierliche Veränderung des Gewichtungsfaktors von 0 bis $\omega_{omax}$ verstellt werden kann. Wird die Eigen-

frequenz $\omega_o$ des Wechselspannungsintegrators proportional zur Drehzahl geführt, so ist der Phasenfehler des Wechselspannungsintegrators konstant. Schwebungsfrequenzen in Antriebsregelungen sind bei der erfindungsgemäßen Schaltungsanordnung wirksamer bedämpfbar.

Anstelle der Sternspannung kann der erfindungsgemäßen Schaltungsanordnung eingangsseitig auch eine Leiterspannung der Drehfeldmaschine zugeführt werden, da der Sternpunkt in vielen Fällen nicht zugänglich ist.

Die erfindungsgemäße Schaltungsanordnung kann ohne weitere Maßnahmen zur Erfassung einer Flußkomponente einer Drehstrommaschine eingesetzt werden, wenn diese Maschine keinen Strom aufnimmt, da in diesem Fall keine ohmschen Ständerspannungsabfälle und induktiven Streuspannungen auftreten. Bei einer belasteten Drehstrommaschine ist die Berücksichtigung dieser Spannungsabfälle in an sich bekannter Weise vorzunehmen, wie dies beispielsweise aus der eingangs erwähnten DE-AS 26 35 965 hervorgeht.

Die erfindungsgemäße Schaltungsanordnung kann auch losgelöst von ihrer Verbindung mit einer Drehfeldmaschine ganz allgemein als Wechselspannungsintegrator eingesetzt werden, wobei der Schaltungsanordnung in diesem Fall anstelle der Sternspannung der Drehfeldmaschine eine Gleichspannungsanteile aufweisende Wechselspannung eingangsseitig zugeführt ist und wobei die Gewichtung der Eingangsspannung des P-Reglers proportional zu einer Größe, vorzugsweise zur Frequenz und die Gewichtung der Eingangsspannung des I-Reglers proportional zum Quadrat dieser Größe erfolgt. Auch hierbei kommen die Vorteile der verstellbaren Eigenfrequenz $\omega_o$ der einen Wechselspannungsintegrator darstellenden Schaltungsanordnung zum Tragen, die in einer frequenzabhängigen Regelgeschwindigkeit für Gleichanteile und Konstanz des Winkelfehlers bestehen.

In einer bevorzugten Schaltungsanordnung ist dem P-Regler ein erstes Multiplizierglied vorgeschaltet und ist das Ausgangssignal des ersten Multipliziergliedes einem zweiten Multiplizierglied zugeführt, das dem Eingang des I-Reglers vorgeschaltet ist. Die Multiplikationsfaktoren der beiden Multiplizierglieder sind hierbei gleich und proportional zur Frequenz der Drehfeldmaschine. Hierbei wird in einfacher Weise erreicht, daß das Eingangssignal des P-Reglers proportional zur Frequenz und das Eingangssignal des I-Reglers proportional zum Quadrat der Frequenz der Drehfeldmaschine ist.

Es ist vorteilhaft, wenn als Multiplizierglieder Pulsbreitenmultiplizierglieder eingesetzt sind und wenn dem zweiten Pulsbreitenmultiplizierglied ein Glättungsglied vorgeschaltet ist. Der Tastgrad der Pulsbreitenmultiplizierglieder ist hierbei proportional zur Frequenz der Drehfeldmaschine. Die Spannung hinter dem Pulsbreitenmultiplizierglied ist jeweils das Produkt aus Tastgrad und Eingangsspannung des Pulsbreitenmultipliziergliedes. Um eine quadratische Beeinflussung der Eingangsspannung des I-Reglers zu erreichen, ist es erforderlich, daß zwischen die beiden bezüglich des Eingangs des I-Reglers in Serie liegenden Pulsbreitenmultiplizierglieder ein Glättungsglied eingefügt ist.

Es ist vorteilhaft, wenn als Glättungsglied ein Kondensator dient, der den Rückführungswiderstand eines dem ersten Pulsbreitenmultiplizierglied nachgeschalteten Umkehrverstärkers überbrückt, wobei das Ausgangssignal des Umkehrverstärkers amEingang des P-Reglers und des zweiten Pulsbreitenmultipliziergliedes ansteht. Hierdurch läßt sich mit einfachen Mitteln eine gute Glättung erreichen.

0007552

Um das Zeitverhalten des Nullpunktsreglers möglichst
wenig zu beeinträchtigen, ist es vorteilhaft, wenn die
Kapazität des Kondensators sehr klein im Verhältnis zu
dem die Zeitkonstante des I-Reglers bestimmenden Kondensator ist. Die untere Grenze der Kapazität des Kondensators ist durch die nötige Glättung gegeben.

In einer bevorzugten Ausführungsform sind als Pulsbreitenmultiplizierglieder FET-Schalter eingesetzt, an deren
Steuereingang das Ausgangssignal eines Taktgenerators
ansteht, dessen Tastgrad proportional zur Frequenz der
Drehfeldmaschine ist. Dies ist eine kostengünstige Realisierung eines Pulsbreitenmultipliziergliedes.

Es ist günstig, wenn der Taktgenerator unterhalb einer
Übergangsfrequenz der Drehfeldmaschine pulsfrequenzverstellbar und oberhalb der Übergangsfrequenz pulsbreitenverstellbar ist. Hiermit wird ein sehr großer Stellbereich für den Tastgrad ermöglicht.

Um eine aufwandsarme Berücksichtigung der ohmschen und
Ständerspannungsabfälle und induktiven Streuspannungen
der Drehfeldmaschine zu gewährleisten, ist es vorteilhaft,
wenn dem Summenpunkt am Eingang des Integrators ein dem
ohmschen Ständerspannungsabfall der Drehfeldmaschine
proportionales Signal zugeführt ist und wenn am Ausgang
des Integrators ein weiterer Summenpunkt vorgesehen ist,
dem ein dem Integral der induktiven Streuspannung proportionales Signal zugeführt ist.

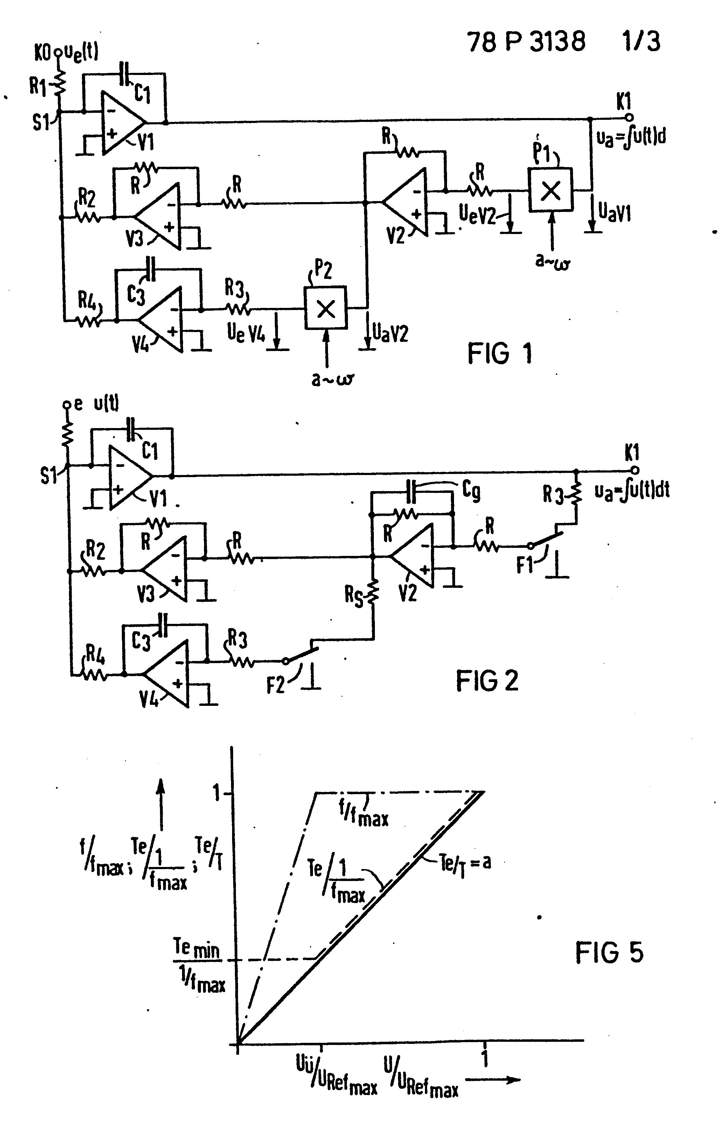

Die Erfindung wird im folgenden anhand von Ausführungsbeispielen in den Figuren 1 bis 5 näher erläutert.

In Figur 1 ist ein erstes Ausführungsbeispiel der erfindungsgemäßen Schaltungsanordnung dargestellt. An der
Eingangsklemme KO liegt die Eingangsspannung $u_e$ an, die

im vorliegenden Anwendungsfall der einer Flußkomponente
der Drehfeldmaschine zugehörigen Phasenspannung entspricht. Die Eingangsspannung $u_e$ ist über den Widerstand
R1 an den Summenpunkt S1 des Integrators V1 gelegt. Der
P-Regler V3, der I-Regler V4 sowie der Umkehrverstärker
V2 bilden zusammen mit dem ersten und zweiten Multiplizierglied P1 und P2 den Nullpunktsregler in einem gegengekoppelten Zweig. Der Umkehrverstärker dient hierbei zur
Bildung der für die Gegenkopplung notwendigen Signalpolarität des Nullpunktsreglers. Das Ausgangssignal $u_a$ der
einen Wechselspannungsintegrator darstellenden Schaltungsanordnung steht an der Klemme K1 an. Der Nullpunktsregler
ist erfindungsgemäß derart aufgebaut, daß das Ausgangssignal des Integrators V1 im Rückführungszweig einem
Multiplizierglied P1 zugeführt ist, dessen Ausgangssignal
am Eingang des Umkehrverstärkers V2 ansteht. Im Multiplizierglied P1 wird dessen Eingangsspannung $U_{a_{V1}}$ mit
einem Faktor a multipliziert, der proportional mit der
Drehzahl der Drehfeldmaschine zwischen den Werten 0 und
1 variierbar ist. Die Ausgangsspannung $U_{e_{V2}}$ des ersten
Multipliziergliedes P1 ergibt sich somit als Produkt
des Gewichtungsfaktors a und der Eingangsspannung $U_{a_{V1}}^*$
des Umkehrverstärkers V2 ist parallel dem Eingang des
P-Reglers V3 und über das zweite Multiplizierglied P2
dem Eingang des I-Reglers V4 zugeführt. Auch das zweite
Multiplizierglied P2 führt eine Multiplikation seiner
Eingangsspannung $U_{a_{V2}}$ mit dem der Frequenz $\omega$ der Drehfeldmaschine M proportionalen Gewichtungsfaktor a durch,
so daß das Eingangssignal $U_{e_{V4}}$ des I-Reglers V4 das
Produkt aus dem Quadrat des Gewichtungsfaktors a und der
Eingangsspannung $U_{a_{V1}}$ des Nullpunktsreglers darstellt.
Damit ist das Eingangssignal des P-Reglers mit dem drehzahlproportionalen Gewichtungsfaktor a, das Eingangssignal
des I-Reglers V4 mit dem Quadrat des Gewichtungsfaktors
a gewichtet. Die Ausgangssignale des P-Reglers V3 und
des I-Reglers V4 sind über die Widerstände R2 und R4
dem Summenpunkt S1 zugeführt.

* des Multipliziergliedes. Die Ausgangsspannung $U_{a_{V2}}$

Als Multiplizierglieder P1 und P2 können prinzipiell Analogmultiplizierglieder eingesetzt sein. Im vorliegenden Anwendungsfall ist dies jedoch nicht sinnvoll, da die Fehler dieser Multiplizierglieder P1 und P2 bei kleinen Werten des Gewichtungsfaktors a zu erheblichen Nullpunktsfehlern am Integratorausgang führen.

Aus diesem Grunde ist es wesentlich günstiger, ein Modulationsmultiplizierverfahren anzuwenden. Dies ist in Figur 2 veranschaulicht. In den Figuren sind übereinstimmende Bauelemente mit übereinstimmenden Bezugszeichen belegt. In Figur 2 sind anstelle der Analogmultiplizierglieder P1 und P2 Pulsbreitenmultiplizierglieder F1 und F2 eingesetzt. Eine kostengünstige Realisierungsmöglichkeit für solche Pulsbreitenmultiplizierglieder F1 und F2 stellen FET-Schalter dar, an deren Steuereingang das Ausgangssignal eines Taktgenerators G ansteht, dessen Tastgrad dem Gewichtungsfaktor a entspricht und somit proportional zur Frequenz $\omega$ der Drehfeldmaschine M ist. Die Pulsbreitenmultiplizierglieder F1 und F2 werden synchron vom Taktgenerator G angesteuert.

Im Fall der Verwendung von Pulsbreitenmultipliziergliedern F1 und F2 ist es jedoch erforderlich, dem zweiten Pulsbreitenmultiplizierglied F2 die Ausgangsspannung des ersten Pulsbreitenmultipliziergliedes F1 geglättet zuzuführen, da ohne diese Maßnahme keine quadratische Abhängigkeit des Eingangssignals des I-Reglers V4 von dem Gewichtungsfaktor a zustande käme. Diese Glättung wird durch Einfügen des Kondensators $C_g$ erreicht, der den Rückführungswiderstand R des Umkehrverstärkers V2 überbrückt. Die Kapazität dieses Kondensators $C_g$ ist sehr klein im Verhältnis zu dem die Zeitkonstante des I-Reglers V4 bestimmenden Kondensators C3, um das Nutzsignal möglichst unbeeinflußt zu lassen und lediglich die überlagerte Schaltfrequenz zu bedämpfen. Die den Pulsbreitenmultipliziergliedern F1 und F2 vorgeschalteten Widerstände $R_S$ dienen dem Schutz des vorgeschalteten Integrators V1 bzw. des vorgeschalteten Umkehrverstärkers V2 vor Rückwirkungen der durch die Pulsbreitenmultiplizierer F1 und F2 hervorgerufenen Schaltvorgänge. Der Widerstandswert des Widerstandes $R_S$ ist hierbei sehr klein gegen den Wert der Widerstände R und R3.

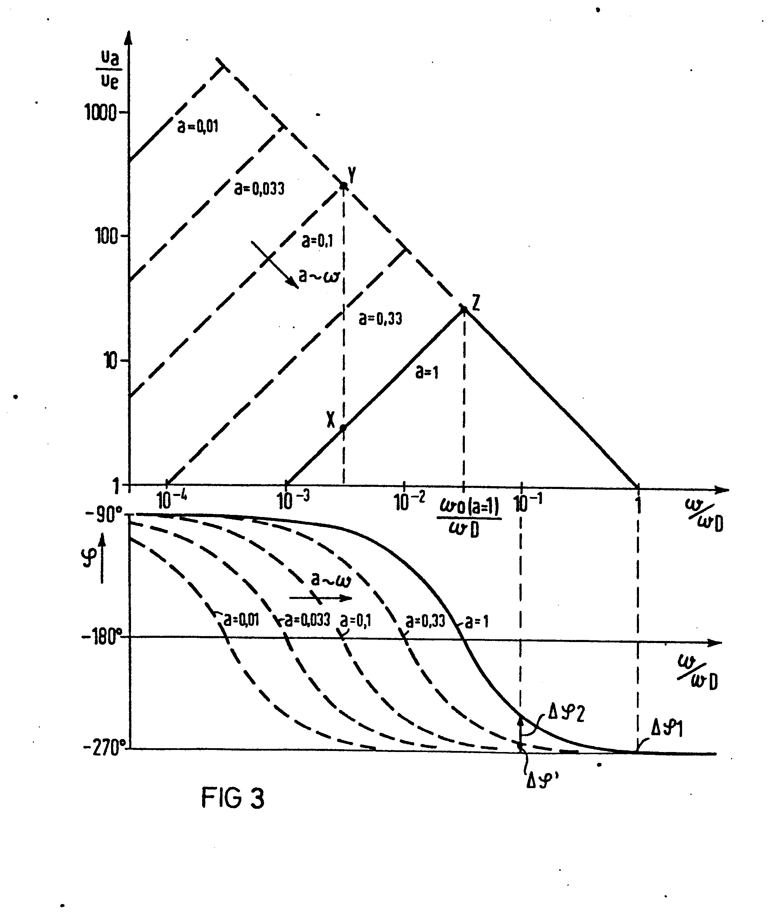

In Figur 3 ist der Frequenzgang der erfindungsgemäßen Schaltungsanordnung dargestellt. Hierbei ist unterstellt, daß eine Optimierung nach dem Betragsoptimum vorgenommen wurde, was zu einer Dämpfung von d = 0,7 führt. Jeder der in Figur 3 dargestellten Frequenzgänge entspricht dem eines $DT_2$-Gliedes.

Im oberen Teil der Figur 3 ist das Amplitudenverhältnis der Ausgangsspannung $u_a$ zur Eingangsspannung $u_e$ der erfindungsgemäßen Schaltungsanordnung als Funktion der Frequenz $\omega$ der Drehfeldmaschine M in doppelt-logarithmischer Auftragung dargestellt. Als Parameter dient in dieser Darstellung der Gewichtungsfaktor a, der im folgenden auch als Tastgrad a bezeichnet wird. Für die Darstellung in Figur 3 wurde der Tastgrad a stufenweise zwischen 0,01 und 1 variiert. Als Abszisseneinheit wird die normierte Frequenz $\omega/\omega_D$ verwendet, wobei $\omega_D$ die Durchtrittsfrequenz der Schaltungsanordnung, d. h. den Schnittpunkt des Amplitudenganges mit der Abszisse in Figur 3 darstellt.

Im unteren Teil der Figur 3 ist die Phasenverschiebung $\varphi$ zwischen Ausgangsspannung $u_a$ und Eingangsspannung $u_e$ ebenfalls in Abhängigkeit von der normierten Frequenz $\omega/\omega_D$ der Drehfeldmaschine M dargestellt. Auch hierbei wurden stufenweise als Parameter der Gewichtungsfaktor oder Tastgrad a zwischen den Werten 0,01 und 1 variiert.

Die erfindungsgemäße Schaltungsanordnung stellt somit einen Wechselspannungsintegrator dar, der eine frequenzabhängige Eigenfrequenz $\omega_o$ bei konstanter Durchtrittsfrequenz $\omega_D$ und konstanter Dämpfung d aufweist. Die Verstellung der Eigenfrequenz $\omega_o$ erfolgt durch Variation des Tastgrades a der beiden Pulsbreitenmultiplizierglieder F1 und F2. Wird die Eigenfrequenz $\omega_o$ proportional zur Frequenz $\omega$ und damit der Drehzahl n der Drehfeldmaschine M geführt, so ist der Phasenfehler des erfindungsgemäßen Wechselspannungsintegrators drehzahlunabhängig.

Der aus der eingangs genannten DE-AS 26 35 965 bekannte Wechselspannungsintegrator weist demgegenüber eine starre, d.h. frequenzunabhängige Eigenfrequenz $\omega_o$ auf. Damit entspricht sein Frequenzgang einer der in Figur 3 dargestellten Kurven. Als Beispiel sei angenommen, der Frequenzgang des bekannten Wechselspannungsintegrators entspräche dem zum Tastgrad a = 1 gehörigen Frequenzgang in Figur 3, der ausgezogen dargestellt ist. Weiterhin sei angenommen, die Nennfrequenz des Drehfeldmaschinenantriebes entspräche $\omega_D$. Aus Figur 3 ist erkennbar, daß der Phasenfehler $\Delta\varphi_1$, d.h. die Abweichung der ausgezogenen Linie vom asymptotischen Wert  $-270^o$ mit ca. $3^o$ sehr klein ist. Wird nun der mit herkömmlichen Wechselspannungsintegratoren ausgestattete Drehfeldmaschinenantrieb mit um den Faktor 10 verringerter Frequenz $\omega$ betrieben, tritt als Phasenfehler der Wert $\Delta\varphi_2$ auf, der in der Größenordnung von $30^o$ liegt. Um einen derartig hohen Phasenfehler auszuschließen, war man bislang gezwungen, den Wechselspannungsintegrator so zu dimensionieren, daß er beispielsweise einen Frequenzgang aufwies, wie er in Figur 3 dem Tastgrad a = 0,1 zugeordnet ist. Dies führte zu einer Verringerung des Phasenfehlers auf den Wert $\Delta\varphi_2'$. Damit mußte allerdings eine schlechtere Bedämpfung bei Schwebungsvorgängen zwischen der Frequenz der Drehfeldmaschine M und der Netzfrequenz in Kauf genommen werden. Bei einer Schwebungsfrequenz von 0,003 $_D$ ergab sich für das Amplitudenverhältnis - wie aus dem oberen Teil der Figur 3 ersichtlich - der vergleichsweise hohe Wert Y, wobei unterstellt ist, daß die Betriebsfrequenz der Drehfeldmaschine $\omega = \omega_D$ sei.

Bei den erfindungsgemäßen Wechselspannungsintegratoren wird die Eigenfrequenz $\omega_o$ kontinuierlich mit der aktuellen Drehzahl oder Frequenz der Drehfeldmaschine M variiert, d.h. daß bei einer Frequenz der Drehfeldmaschine $\omega = \omega_D$ der zum Tastgrad a = 1 gehörige Frequenzgang des Wechselspannungsintegrators vorliegt, bei einer Frequenz der Drehfeldmaschine M von $\omega = 0,1 \omega_D$ der zu a = 0,1 gehörige Verlauf des Frequenzgangs. Wie aus Figur 3 leicht ersichtlich ist, treten damit nur noch sehr kleine und konstante Phasenfehler $\Delta\varphi$ auf, da mit abnehmender Frequenz $\omega$ des Drehfeldmaschinenantriebs die den Phasenverlauf des Wechselspannungsintegrators wiedergebenden Kurven kontinuierlich und proportional zur Frequenz $\omega$ nach links verschoben werden, so daß der zwischen dem unteren Teil jeder Kurve und der durch - 270$^o$ verlaufenden Asymptote liegende Phasenfehler $\Delta\varphi$ klein und konstant bleibt. Für den oben beispielhaft angeführten Betriebsausfall $\omega = \omega_D$ ist für das Amplitudenverhältnis die ausgezogen dargestellte Kurve anzuwenden. Für eine Schwebungsfrequenz von 0,003 $\cdot \omega_D$ tritt in diesem Fall eine erheblich bessere Bedämpfung auf, da für das Amplitudenverhältnis nunmehr anstelle des Wertes Y der Wert X vorliegt.

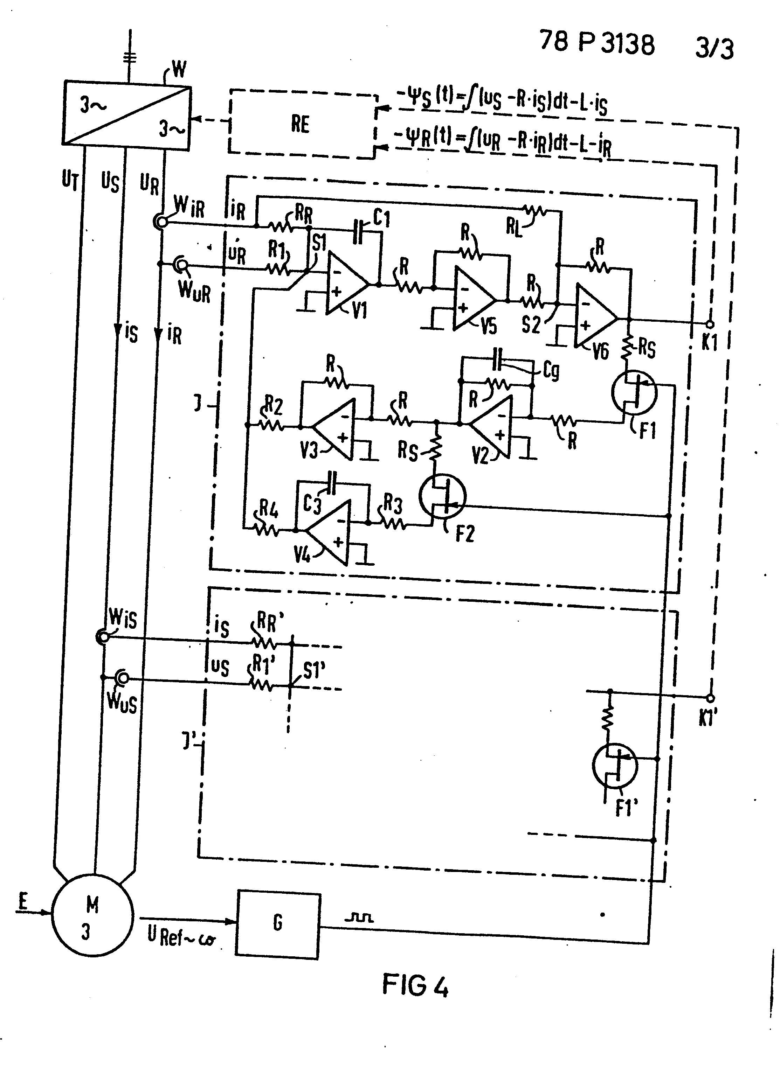

Figur 4 schließlich zeigt den Einsatz der erfindungsgemäßen Schaltungsanordnung in Verbindung mit einem Drehfeldmaschinenantrieb, wobei die Drehfeldmaschine M als Beispiel eine eigengetaktete Synchronmaschine ohne Polradlagegeber ist, die von einem Drehstromumrichter W gespeist wird, dessen Ausgangsspannungen ein frequenzvariables Drehspannungssystem $U_T$, $U_S$ und $U_R$ darstellen. Zur Erfassung der Lage des Maschinenflusses aus den Klemmenspannungen der Drehfeldmaschine M im Rahmen der feldorientierten Regelung dieser Drehfeldmaschine werden zwei der oben beschriebenen erfindungsgemäßen Schaltungsanordnungen benötigt, die in Figur 4 mit I und I' bezeichnet sind. Die Schaltungsanordnungen I und I' sind gleich aufgebaut. Sie werden daher im folgenden mit übereinstimmenden Bezugszeichen belegt, wobei die Schaltungselemente der Schaltungsanordnung I' lediglich mit einem Apostroph versehen sind. Die Schaltungsanordnung I ist der mit der Sternspannung $U_R$ verknüpften Flußkomponente der Drehfeldmaschine M zugeordnet, die Schaltungsanordnung I' der mit der Sternspannung $U_S$ verknüpften Flußkomponente. Aus der Kenntnis dieser beiden Flußkomponenten ist es möglich, die Lage des Flußvektors der Drehfeldmaschine eindeutig festzulegen und den Drehstromumrichter W in bekannter Weise durch eine Regeleinheit RE zu steuern.

Die Eingangsspannung für die Schaltungsanordnung I bildet die über einen Spannungswandler $W_{uR}$ erhaltene Spannung $u_R$, die der Sternspannung $U_R$ proportional ist. Zur Berücksichtigung der zugehörigen ohmschen Ständerspannungsabfälle und induktiven Streuspannungen wird über den Stromwandler $W_{iR}$ der zugehörige Phasenstrom ermittelt. Zur Kompensation des ohmschen Ständerspannungsabfalls wird das Ausgangssignal des Stromwandlers $W_{iR}$ über den Widerstand $R_R$ dem Summenpunkt S1 des Integrators zugeführt. Zur Kompensation der zugehörigen Streuspannung wird darüber hinaus das Ausgangssignal des Stromwandlers $W_{iR}$ über den Widerstand $R_L$ dem Summenpunkt S2 eines Summierverstärkers V6 zugeleitet, der über einen Umkehrverstärker V5 dem Integrator V1 nachgeschaltet ist. Der Summierverstärker V6 bildet somit die Summe aus dem invertierten Signal des Integrators V1 und einem dem Integral der induktiven Streuspannung proportionalen Signal.

Durch diese Art der Berücksichtigung der induktiven Streuspannung ist es nicht notwendig, wie bei der eingangs erwähnten DE-AS 26 35 965 die Ableitung des Phasenstroms $i_R$ nach der Zeit zu bilden. Abgesehen von diesen der Kompensation der ohmschen Ständerspannungsabfälle und induktiven Streuspannungen dienenden Schaltungsmaßnahmen entspricht die Schaltungsanordnung I genau der in Figur 2 dargestellten und erörterten. Die der Sternspannung $U_S$ zugeordnete Schaltungsanordnung I' entspricht - wie bereits erwähnt - der Schaltungsanordnung I. Eingangsseitig sind hier die Ausgangssignale des der Drehstromphase S zugeordneten Spannungswandlers $W_{uS}$ und des Stromwandlers $W_{iS}$ zugeführt. Somit erscheint an der Klemme K1 der Schaltungsanordnung I als Flußkomponente der Wert

$$ - \psi_R (t) = \int (u_R - R \cdot i_R) \, dt - L \cdot i_R, $$

an der Klemme K1' dagegen der Wert

$$ - \psi_S (t) = \int (u_S - R \cdot i_S) \, dt - L \cdot i_S. $$

Die beiden Flußkomponenten $\psi_R$ und $\psi_S$ werden in der Regeleinheit RE weiterverarbeitet.

Zur Steuerung der als FET-Schalter ausgeführten Pulsbreitenmultiplizierer F1 und F2 bzw. F1' und F2' dient das rechteckförmige Ausgangssignal des Taktgenerators G, mit dem Tastgrad a das an die Steuereingänge der genannten FET-Schalter gelegt ist. Zur frequenzproportionalen Steuerung des Tastgrades a wird dem Taktgenerator G eine der Frequenz $\omega$ der Drehfeldmaschine M proportionale Referenzspannung $U_{Ref}$ zugeführt, die beispielsweise über einen mit der Motorwelle gekoppelten Tachogenerator gewonnen werden kann.

Um einen möglichst großen Stellbereich des Tastgrades a zu ermöglichen, wird als Taktgenerator G ein Taktgenerator mit Pulsfrequenz- und Pulsbreitenverstellung eingesetzt. Dies ist in Figur 5 schematisch veranschaulicht. Bei einer der Drehzahl proportionalen Referenzspannung $U_{Ref}$, die kleiner als eine Übergangsspannung $U_ü$ ist, wird die Frequenz verstellt (Kurve $f/f_{max}$). Dabei bleibt die Impulsbreite $T_{e min}$ konstant. Bei einer Bezugsspannung $U_{Ref}$, die oberhalb der Übergangsspannung $U_ü$ liegt, bleibt die Frequenz konstant und es ändert sich die Impulsbreite (Kurve $T_e/(1/f_{max})$). Der Übergang von Frequenz- zu Impulsbreitenverstellung erfolgt hinsichtlich des Tastgrades a stetig. Es entsteht eine Rechteckspannung mit einem in weiten Grenzen (z.B. 1 : 1000) variablen Tastgrad (Kurve $T_e/T$).

Dieser sehr große Stellbereich ermöglicht die Vorgabe sehr kleiner Tastgrade oder Gewichtungsfaktoren a, bei denen der Nullpunktsregler praktisch vollständig von dem Integrator angekoppelt ist. Dies ist von Bedeutung für die Lageortung des Läufers der Drehfeldmaschine M im Stillstand vor der Inbetriebsetzung der Drehfeldmaschine, da hierbei z.B. bei einer Synchronmaschine bei abgeschalteter Ständerstromversorgung lediglich die durch die beim Auferregen des Polrades in den Ständerwicklungen der Drehfeldmaschine M entstehende Induktionsspannung durch den Integrator aufintegriert wird. Eine angekoppelte Nullpunktsregelung würde in diesem Fall dazu tendieren, den Integratorinhalt auf Null zu bringen und damit eine exakte Lageortung des Läufers verfälschen. Bei der eingangs erwähnten DE-AS 26 35 965 wird dieses Problem durch Abschalten des Nullpunktsreglers gelöst, wobei allerdings die eingangs angesprochenen Probleme beim plötzlichen Zuschalten des Nullpunktsreglers nach Anlauf der Drehfeldmaschine M auftreten. Die erfindungsgemäße Schaltungsanordnung ermöglicht demgegenüber, den Nullpunktsregler vom Beginn der Lageortung des Läufers andauernd, aber mit frequenzproportionalem Durchgriff in Eingriff zu lassen, wobei durch die mit dem Tastgrad a zunehmende Ankopplung oder Erhöhung des Durchgriffs des Nullpunktsreglers eine an die Frequenz der Drehfeldmaschine M angepaßte Ankopplung des Nullpunktsreglers und damit mit der Frequenz der Drehfeldmaschine zunehmende Regelgeschwindigkeit erreichbar ist. Beim Tastgrad 1 und damit voll angekoppeltem Nullpunktsregler werden die Gleichspannungsanteile des Ausgangssignals des Integrators mit höchster Regelgeschwindigkeit ausgeregelt. Vor Durchführung der Lageortung des Läufers ist es vorteilhaft, zunächst einmal den Tastgrad a auf annähernd 1 zu bringen, um den Integrator zunächst auf Null zu setzen. Für die anschließende Lageortung wird - wie eben erwähnt - dann der Tastgrad a auf einen drehzahlproportionalen Wert oder bei Läuferstillstand auf Null gebracht.

Zusammenfassend läßt sich feststellen, daß durch die einen Wechselspannungsintegrator darstellende erfindungsgemäße Schaltungsanordnung ein problemarmer Betrieb einer feldorientiert betriebenen Drehfeldmaschine zu erreichen ist. Durch den an die Frequenz der Drehfeldmaschine angepaßten Frequenzgang eines derartigen Wechselspannungsintegrators ist durchgehend vom Beginn des Anfahrens der Drehfeldmaschine bis zum Erreichen der Nennfrequenz ein kontinuierlicher Betrieb des Wechselspannungsintegrators ermöglicht. Die auftretenden Phasenfehler bleiben über den gesamten Betriebsbereich konstant. Da ein plötzliches Zuschalten des Nullpunktsreglers des Wechselspannungsintegrators nach dem Anlauf der Drehfeldmaschine auf die laufende Maschine entfällt, werden die dabei auftretenden Stabilitätsprobleme beseitigt. Die erfindungsgemäße Schaltungsanordnung kann außer zur Flußerfassung einer Drehfeldmaschine überall dort eingesetzt werden, wo ein Wechselspannungsintegrator mit verstellbarer Eigenfrequenz vorteilhaft ist.

5 Figuren
8 Patentansprüche

Patentansprüche

1. Schaltungsanordnung zur Bildung eines elektrischen Spannungssignals, das einer Flußkomponente in einer Drehfeldmaschine proportional ist, der eingangsseitig eine zur Flußkomponente gehörigen Sternspannung proportionale Spannung zugeführt ist, mit einem Integrator als Eingangsglied, an dessen Ausgang das der Flußkomponente proportionale Spannungssignal abgegriffen ist, und mit einem zur Unterdrückung des Gleichanteils dieses Spannungssignals bemessenen Nullpunktsregler, dessen Eingang mit dem Ausgang des Integrators verbunden ist und dessen Ausgang an einen Summenpunkt am Eingang des Integrators angeschlossen ist, d a d u r c h  g e k e n n z e i c h n e t, daß der Nullpunktsregler einen P-Regler (V3) und einen I-Regler (V4) aufweist, daß das Ausgangssignal des P-Reglers (V3) und das Ausgangssignal des I-Reglers (V4) dem Summenpunkt (S1) zugeführt ist und daß das Ausgangssignal des Integrators (V1) proportional zur Frequenz ($\omega$) der Drehfeldmaschine (M) gewichtet (a; P1, F1) dem Eingang des P-Reglers (V3) und proportional zum Quadrat der Frequenz ($\omega$) gewichtet ($a^2$; P1, P2, F1, F2) dem Eingang des I-Reglers (V4) zugeführt ist, wobei der Gewichtungsfaktor (a) einen Maximalwert 1 aufweist.

2. Schaltungsanordnung nach Patentanspruch 1, d a d u r c h  g e k e n n z e i c h n e t, daß dem P-Regler (V3) ein erstes Multiplizierglied (P1) vorgeschaltet ist und daß das Ausgangssignal ($U_{eV2}$) des ersten Multipliziergliedes (P1) einem zweiten Multiplizierglied (P2) zugeführt ist, das dem Eingang des I-Reglers (V4) vorgeschaltet ist.

3. Schaltungsanordnung nach Patentanspruch 2, d a d u r c h  g e k e n n z e i c h n e t, daß als Multiplizierglieder (P1, P2) Pulsbreitenmultiplizierglieder (F1, F2) eingesetzt sind und daß dem zweiten Pulsbreitenmultiplizierglied (F2) ein Glättungsglied vorgeschaltet ist.

4. Schaltungsanordnung nach Patentanspruch 3, d a d u r c h   g e k e n n z e i c h n e t, daß als Glättungsglied ein Kondensator ($C_g$) dient, der den Rückführungswiderstand (R) eines dem ersten Pulsbreitenmultiplizierglied (F1) nachgeschalteten Umkehrverstärkers (V2) überbrückt, wobei das Ausgangssignal ($U_{a_{V2}}$) des Umkehrverstärkers (V2) am Eingang des P-Reglers (V3) und des zweiten Multipliziergliedes (F2) ansteht.

5. Schaltungsanordnung nach Patentanspruch 4, d a d u r c h   g e k e n n z e i c h n e t, daß die Kapazität des Kondensators ($C_g$) sehr klein im Verhältnis zu dem die Zeitkonstante des I-Reglers (V4) bestimmenden Kondensator (C3) ist.

6. Schaltungsanordnung nach einem der Patentansprüche 3 bis 5, d a d u r c h   g e k e n n z e i c h n e t, daß als Pulsbreitenmultiplizierglieder (F1, F2) FET-Schalter eingesetzt sind, an deren Steuereingang das Ausgangssignal eines Taktgenerators (G) ansteht, dessen Tastgrad (a) proportional zur Frequenz ($\omega$) der Drehfeldmaschine (M) ist.

7. Schaltungsanordnung nach Patentanspruch 6, d a d u r c h   g e k e n n z e i c h n e t, daß der Taktgenerator (G) unterhalb einer Übergangsfrequenz ($\omega_{\ddot{u}} \sim U_{\ddot{u}}$) der Drehfeldmaschine (M) pulsfrequenzverstellbar und oberhalb der Übergangsfrequenz pulsbreitenverstellbar ist.

8. Schaltungsanordnung nach einem der Patentansprüche 1 bis 7, d a d u r c h   g e k e n n z e i c h n e t, daß

dem Summenpunkt (S1) am Eingang des Integrators (V1) ein dem ohmschen Ständerspannungsabfall der Drehfeldmaschine (M) proportionales Signal ($i_R$ . $R_R$) zugeführt ist und daß am Ausgang des Integrators (V1) ein weiterer Summenpunkt (S2) vorgesehen ist, dem ein dem Integral der induktiven Streuspannung proportionales Signal ($i_R$ . L) zugeführt ist.

FIG 1

FIG 2

FIG 5

FIG 3

FIG 4

U0007552

<table>
<tr><td colspan="2">Europäisches Patentamt</td><td>EUROPÄISCHER RECHERCHENBERICHT</td><td>Nummer der Anmeldung<br>EP 79 102 478.9</td></tr>
</table>

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – C – 1 806 769 (SIEMENS)<br>* Spalte 5, Zeilen 42 bis 68; Fig. 4 *<br>-- | 1,8 |
| | CH – A – 490 190 (SIEMENS)<br>* Spalte 3, Zeile 45 und folgende *<br>-- | 1,6 |
| | DE – B – 2 144 422 (SIEMENS)<br>* Spalte 6, Zeilen 1 bis 12 *<br>-- | 1 |
| D | DE – B2 – 2 635 965 (SIEMENS)<br>* gesamter Inhalt *<br>-- | 1-8 |
| A | DE – A1 – 2 340 506 (BROWN, BOVERI & CIE)<br>* Seite 5, Absatz 2 *<br>----- | 5 |

**KLASSIFIKATION DER ANMELDUNG (Int.Cl.³)**

H 02 P 7/44
G 01 R 33/02

**RECHERCHIERTE SACHGEBIETE (Int. Cl.³)**

G 01 R 33/00
G 05 B 13/00
H 02 P 5/34
H 02 P 7/42
H 02 P 7/44

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-10-1979 | GESSNER |

EPA form 1503.1 06.78